# EUROPÄISCHE PATENTANMELDUNG

(11) **EP 2 848 390 A1**
(43) Veröffentlichungstag der Anmeldung: **18.03.2015**
(21) Anmeldenummer: 14175069.5
(22) Anmeldetag: 30.06.2014
(51) Int. Cl.: B29C 55/28, B29C 47/00, B29C 47/26, B29C 47/88, B32B 27/08, B32B 27/30, B32B 27/32, B32B 27/34, B32B 27/36, B65D 65/40

(54) **Mehrschichtige Folie und Verfahren zu ihrer Herstellung**

(30) Priorität: 05.07.2013 DE 102013107124; 16.07.2013 DE 102013107509
(71) Anmelder: PLAMEX Maschinenbau GmbH, 53539 Kelberg/Eifel (DE)
(72) Erfinder: Herchenbach, Maximilian, 53507 Dernau-Marienthal (DE)
(74) Vertreter: Wagner, Matthias

(57) **Zusammenfassung**

Die Erfindung betrifft eine mehrschichtige Folie, die unterhalb einer ersten äußeren Schicht mindestens die nachfolgend aufgeführten Schichten umfasst:
- eine zweite Schicht auf Basis eines Polyolefins,
- eine dritte Schicht auf Basis eines Polyamids,
- eine vierte Schicht auf Basis eines Ethylen-Vinylalkohol-Copolymers,
- eine fünfte Schicht auf Basis eines Polyamids,
- eine sechste Schicht aus einem Haftvermittler,
- eine siebte innerste Schicht auf Basis eines Polyolefins

wobei alle Schichten im Coextrusionsverfahren miteinander verbunden sind und die erste äußere Schicht auf Basis von Polybutylenterephthalat (PBT) mit einen Schmelzpunkt zwischen 200°C und 230°C und einer Kristallinität, gemessen als Schmelzeenthalpie in einem Differential-Scanning-Kalorimeter bei einer Aufheizrate von 10 K/min nach ISO 3146 von mindestens 40 J/g gebildet ist.t sowie ein Verfahren zur Herstellung derselben.

## Beschreibung

Die Erfindung betrifft eine mehrschichtige Folie, die beispielsweise als Nahrungsmittelhülle oder für Verpackungen Verwendung finden kann und je nach Anforderung siegelfähig und/oder bedruckbar sein soll.

Die Erfindung betrifft ferner auch ein Verfahren zur Herstellung einer solchen Folie.

Aus der gattungsbildenden EP 2 051 854 B1 ist es bereits bekannt, eine solche mehrschichtige Folie mit einem Schichtenaufbau zu versehen, der unterhalb einer ersten äußeren Schicht aus Polyethylenterephthalat (PET) insgesamt acht weitere Schichten aufweist, nämlich ausgehend von der ersten äußeren Schicht aus PET eine zweite Schicht aus einem Haftvermittler, eine dritte Schicht aus einem Polyolefin, eine vierte Schicht aus einem Haftvermittler, eine fünfte Schicht aus Polyamid, eine sechste Schicht aus EVOH, eine siebte Schicht aus Polyamid, eine achte Schicht aus einem Haftvermittler und eine neunte Schicht aus einem Polyolefin. Diese bekannte Folie zeigt für die Anwendung als Verpackung für Lebensmittel brauchbare Eigenschaften, jedoch muss z.B. beim Siegeln einer derartigen Folie sehr sorgfältig vorgegangen werden, da die Folienaußenlage leicht am Siegelbalken anhaftet und überdies erscheint die Bedruckbarkeit, Dimensionsstabilität und Sterilisierbarkeit ohne nachteilige Beeinflussung der optischen Gestaltung der Folie insbesondere im Hinblick auf eventuelle temperaturbedingte Eintrübungen verbesserungswürdig.

Aus der EP 2 508 338 A1 ist ferner eine Mehrschichtfolie für leicht zu öffnende Verpackungen bekannt, die als erste äußere Schicht eine Trägerschicht aus wenigstens einem thermoplastischen Polymer aufweist. Unter anderem kann es sich hierbei um um amorphes Polybutylenterephthalat (PBT) handeln, ohne dieses näher zu spezifizieren. Die Trägerschicht wird durch eine Klebstoffschicht durch Kaschieren mit den weiteren Schichten verbunden. Ein solches Kaschieren der Trägerschicht ist aufwändig und zudem treten bei verschiedenen PBT-Typen Schwierigkeiten in Bezug auf die zu vermeidende Anhaftung am Siegelbalken oder einem Schweissbalken auf, die es zu verbessern gilt.

Aufgabe der Erfindung ist es daher, eine Folie der eingangs genannten Art sowie ein Verfahren zu ihrer Herstellung vorzuschlagen, die die Nachteile des Standes der Technik überwindet.

Zur Lösung der gestellten Aufgabe schlägt die Erfindung eine Ausgestaltung einer mehrschichten Folie gemäß den Merkmalen des Patentanspruchs 1 vor.

Ein Verfahren zur Herstellung einer derartigen Folie ist Gegenstand des Patentanspruchs 16.

Vorteilhafte Ausgestaltungen und Weiterbildungen der Erfindung sind Gegenstand der jeweiligen abhängigen Ansprüche.

Der erfindungsgemäße Vorschlag besteht aus einer mindestens sieben Schichten umfassenden Schichtenabfolge zur Ausbildung der Folie, die im Coextrusionsverfahren gemeinsam erzeugt und als jeweils diskrete Schichten haftfest miteinander verbunden werden, d.h. ausgehend von der äußersten ersten Schicht liegen alle weiteren Schichten diskret bis hin zur mindestens siebten inneren Schicht aufeinander.

Erfindungsgemäß wurde festgestellt, dass durch Ausbildung der die spätere Außenschicht bildenden ersten äußeren Schicht aus einem Polybutylenterephtalat (PBT) mit einen Schmelzpunkt zwischen 200°C und 230°C und einer Kristallinität, gemessen als Schmelzeenthalpie in einem Differential-Scanning-Kalorimeter bei einer Aufheizrate von 10 K/min nach ISO 3146 von mindestens 40 J/g die Nachteile des Standes der Technik auf überraschend einfache Weise überwunden werden.

Erfindungsgemäß umfasst die mehrschichtige coextrudierte Folie somit mindestens eine erste äußere Schicht auf Basis von PBT, eine zweite Schicht auf Basis eine Polyolefins, eine dritte Schicht auf Basis eines Polyamids, eine vierte Schicht auf Basis eines Ethylen-Vinylalkohol-Copolymers, eine fünfte Schicht auf Basis eines Polyamids, eine sechste Schicht auf Basis eines Haftvermittlers, sowie schließlich eine siebte, die Innenoberfläche der Folie bildende Schicht auf Basis eines Polyolefins.

Überraschenderweise wird bei Ausbildung einer solchen Folie mit einer äußeren Schicht auf Basis von PBT die erzielbare Taktzahl einer Siegelanlage durch Einstellung einer höheren Siegelbalkentemperatur signifikant erhöht, wofür die hohe Warmformbeständigkeit der PBT-Schicht verantwortlich zeigt, die ein Ankleben an Siegelbalken effektiv verhindert. Dies ist umso überraschender, als das PBT gemäß der Erfindung einen niedrigeren Schmelzpunkt als die im Stand der Technik vorgeschlagene Ausbildung der äußeren Schicht aus PET aufweist.

Darüber hinaus zeigt sich bei der erfindungsgemäßen Folie im Vergleich zum Stand der Technik eine deutlich erhöhte Dimensionsstabilität im Laminierversuch und auch ein geringerer Kaltschrumpf bzw. Nachschrumpf der Folie bei Lagerung für einen Zeitraum von etwa 2 Wochen.

Die Sterilisierbarkeit etwa bei den üblichen 121°C ist ebenfalls deutlich verbessert, denn es haben sich in entsprechenden Versuchen keine negativen Eintrübungen der erfindungsgemäßen Folie gezeigt, was die Anwendung der erfindungsgemäßen Folie für so genannte "Cook-in"-Lösungen prädestiniert.

Schließlich findet sich bei der im Rahmen der Erfindung vorgeschlagenen Folie ein ideales Verhältnis der möglichst geringen Verarbeitungstemperatur bei gleichzeitig möglichst hoher Warmformbeständigkeit und es zeigt sich durch eine hohe Steifigkeit des gesamten Verbundes der erfindungsgemäßen Folie eine bessere Bedruckbarkeit, wofür vermutlich der hohe E-Modul der erfindungsgemäß vorgeschlagenen ersten äußeren Schicht aus PBT verantwortlich ist.

Da die erfindungsgemäße Folie in einem Arbeitsgang coextrudiert wird, werden gleichzeitig alle Schichten erzeugt und miteinander verbunden, was eine hoch rationelle Fertigung ermöglicht. Darüber hinaus kann ein solcher coextrudierter Verbund problemlos durch Recken längs- und/oder querverstreckt werden.

Die erste Schicht der erfindungsgemäßen Folie kann nach einem Vorschlag der Erfindung aus einem PBT gebildet sein, welches zu mindestens 80 % aus einem Polyester, enthaltend mindestens 90 % Terephthalsäure als Säurekomponente und mindestens 90 % Butandiol als Diolkomponente umfasst.

Der Schmelzpunkt der ersten Schicht der erfindungsgemäßen mehrschichtigen Folie liegt im Bereich zwischen 200°C und 230°C, um die gewünschten hohen Taktzahlen zu realisieren, wobei ferner eine Kristallinität, gemessen als Schmelzeenthalpie in einem Differential-Scanning-Kalorimeter bei einer Aufheizrate von 10 K/min nach ISO 3146 von mindestens 40 J/g vorhanden ist.

Nach einem weiteren Vorschlag der Erfindung kann die erste Schicht auch aus einer Mischung aus PBT und bis zu 20 %, vorzugsweise 5 bis 15 % eines anderen Polyesters, d.h. eines von PBT verschiedenen Polyesters gebildet sein, wofür z.B. ein glykolmodifizierter Polyester mit einem Schmelzpunkt von 230 bis 250°C in Betracht kommt.

Es versteht sich, dass die erste äußere Schicht der erfindungsgemäßen Folie darüber hinaus auch noch an sich bekannte Additive, wie Antiblockmittel, Gleitmittel etc. umfassen kann.

Die zweite Schicht der erfindungsgemäßen Folie umfasst nach einem Vorschlag der Erfindung ein haftvermittelndes Olefin-Copolymer oder eine Kombination dieses haftvermittelnden Olefin-Copolymers mit bis zu 90 % eines weiteren Polyolefins, wobei dann das haftvermittelnde Olefin-Copolymer entweder homogen im weiteren Polyolefin oder diskret in dessen Grenzflächen zur ersten und dritten Schicht angeordnet ist.

Das haftvermittelnde Olefin-Copolymer wird bevorzugt aus einem Maleinsäureanhydridmodifizierten Polyolefin oder einem Epoxy-modifizierten Polyolefin gebildet. Bevorzugt handelt es sich um ein mit an Polyamid und PBT haftenden Molekülen gepfropftes oder copolymerisiertes Polyolefin. Haftende Moleküle sind z.B. ungesättigte Carbonsäuren, wie Maleinsäure, Fumarsäure, (Meth)acrylsäure, Säureanhydride (Maleinsäureanhydrid), Epoxyverbindungen (Glycidylmethacrylat) oder Vinylacetat.

Das weitere Polyolefin zur Kombination mit dem haftvermittelnden Olefin-Copolymer wird nach einem Vorschlag der Erfindung ausgewählt aus der Gruppe umfassend Polyethylen niedriger Dichte (LDPE) und lineares Polyethylen niedriger Dichte (LLDPE) mit einer Dichte von 0,910 bis 0,930 g/cm³.

Nach einem Vorschlag der Erfindung umfasst die mehrschichtige Folie somit einen siebenschichtigen Aufbau, wobei dann die an die äußere Schicht angrenzende zweite Schicht entweder nur aus dem haftvermittelnden Olefin-Copolymer oder aus einer homogenen Kombination von bis zu 90 % des weiteren Polyolefins mit dem haftvermittelnden Olefin-Copolymer besteht, welches den verbleibenden Rest bildet.
Das haftvermittelnde Olefin-Copolymer verbessert die Haftung zwischen der ersten äußeren Schicht aus PBT und der an die zweite Schicht auf der gegenüberliegenden Seite angrenzenden dritten Schicht auf Basis eines Polyamids. Das haftvermittelnde Olefin-Copolymer kann beispielsweise durch Verwendung eines entsprechenden Masterbatches zur Herstellung der zweiten Schicht im Rahmen der Koextrusion erstellt werden.

Nach dem alternativen Vorschlag der Erfindung ähnelt die erfindungsgemäße mehrschichtige Folie einem aus insgesamt neun Schichten gebildeten Schichtenaufbau, und zwar wenn das haftvermittelnde Olefin-Copolymer diskret und damit quasi zwei weitere Schichten bildend an den Grenzflächen der in diesem Fall aus dem weiteren Polyolefin gebildeten zweiten Schicht zur ersten und dritten Schicht angeordnet ist. Auch in diesem Fall verbessert das haftvermittelnde Olefin-Copolymer die Haftung zwischen dem PBT der ersten Schicht und dem Polyolefin der zweiten Schicht einerseits sowie dem Polyolefin der zweiten Schicht und dem Polyamid der dritten Schicht. Hierbei kann vorgesehen sein, beide diskreten Schichten aus dem gleichen oder aus unterschiedlichen Olefin-Copolymeren zu bilden, um z.B. die Haftung zu der angrenzenden ersten bzw. dritten Schicht zu optimieren.

Nach einem weiteren Vorschlag der Erfindung enthalten die dritte und/oder fünfte Schicht, welche gleich oder verschieden voneinander aufgebaut sein können, mindestens 75 % eines Polyamids, wobei Polyamid-6 als besonders geeignet angesehen wird.

Die Polyamide können aus Aminocarbonsäuren bzw davon abgeleiteten Lactamen mit 4-12 C-Atomen, bevorzugt PA6, PA12, oder aus Diaminen und Dicarbonsäuren mit 4-12 C-Atomen, z.B. PA66, PA6.10, PA6.12, oder Copolyamiden aus den genannten Monomeren, bevorzugt aus 75 bis 95 % Caprolactam und der komplementären Menge an Laurinlactam, Lauryllactam oder äquimolaren Mischung aus Dicarbonsäuren, ausgewählt aus der Adipin-, Kork-, Sebacin-, Isophthal- und Terepththalsäure umfassenden Gruppe und Aminen, ausgewählt aus der Hexmethyldiamin, Octamethylendiamin, Methylpentandiamin, Metaxylylendiamin, Trimethylenhexamethylendiamin und Isophorondiamin umfassenden Gruppe gebildet werden.

Das Polyamid, z.B. Polyamid-6 oder eines der vorgenannten Co-Polyamide können nach einem weiteren Vorschlag der Erfindung auch mit bis zu 25 % eines teilaromatischen, amorphen Polyamids aus im Wesentlichen 50 bis 100 % Isophthalsäure und entsprechend 50 bis 0 % Terephthalsäure als Säurekomponente und 50 bis 100 % Hexamethylendiamin und entsprechend 50 bis 0 % weitere Diamine, ausgewählt aus der Diaminodiphenylmethan, (Diaminodimethyl)diphenylmethan, Isophorondiamin, Methylpentadiamin umfassenden Gruppe gemischt werden.

Die erfindungsgemässen Polyamide weisen Viskositätszahlen, gemessen nach ISO 307 in 96%iger Schwefelsäure, von 150-300 ml/g, bevorzugt 190-250 ml/g auf.

Die Dicke der dritten und/oder fünften Schicht beträgt nach einem Vorschlag der Erfindung 3 bis 20 µm, vorzugsweise 6 bis 15 µm.

Es versteht sich, dass die erfindungsgemäße Folie auch bis zu 30 % weitere Polymere, z.B. lonomere oder weitere Zusatzstoffe, wie Verarbeitungshilfsmittel und Pigmente umfassen kann.

Die vorangehend erläuterten dritten und fünften Schichten der erfindungsgemäßen Folie verleihen dieser gemeinsam mit der ersten äußeren Schicht aus PBT die gewünschten mechanischen Festigkeiten und Eigenschaften, während die zweite Schicht aus einem Polyolefin als Feuchtigkeitsbarriere fungiert.

Die vierte Schicht der erfindungsgemäßen Folie kann nach einem Vorschlag der Erfindung aus einem Ethylen-Vinylalkohol-Copolymer mit einem Ethylengehalt von 29 bis 50 Mol-%, bevorzugt 35 bis 40 Mol-% gebildet sein und dient als Sauerstoffbarriere, um den Anforderungen einer Lebensmittelverpackung bzw. Nahrungsmittelhülle gerecht zu werden.

Die siebte innerste Schicht dient als Siegelschicht und wird zu diesem Zweck aus einem Polyolefin, bevorzugt ein Poly-alpha-Olefin, z.b. PE oder PP, oder ein Copolymer auf Basis Ethylen oder Propylen wie z.B. Copolymer von Ethylen mit anderen alpha-Olefinen, wie z.B. Ethylen/Propylen, Ethylen-Buten, Ethylen/1-hexen, Ethylen-1-Octen-Copolymer, EVA, Ethylen-Acrylat-Copolymer, Ionomer hergestellt.

Die im Rahmen der Erfindung vorgeschlagene Folie kann unverstreckt verbleiben, jedoch ist es für die Beeinflussung des Schrumpfverhaltens sowie die Festigkeit der Folie auch vorgesehen, diese mit einem Flächenreckverhältnis von 1:8 bis 1:20, vorzugsweise 1:10 bis 1:16 biaxial zu verstrecken, so dass sich eine Gesamtdicke der Folie nach dem biaxialen Verstrecken von 20 bis 70 µm, vorzugsweise 30 bis 50 µm einstellt.

Unter Flächenreckverhältnis wird im Sinne dieser Erfindung das Reckverhältnis längs x quer verstanden.

Es kann vorgesehen sein, die erfindungsgemäße Folie so einzustellen, dass sie einen Schrumpf in Längs- und Querrichtung, gemessen bei 85°C/1 min in Wasser in Längs- und Querrichtung von mindestens 20 %, bevorzugt 30 bis 50 % aufweist. Andererseits ist es aber auch möglich, mittels der PBT-Schicht als erste Schicht einen nahezu null-prozentigen Schrumpf zu erzielen, was etwa für Siegelfolien wünschenswert ist.

Das Verfahren zur Herstellung der vorangehend erläuterten Folie beruht darauf, die Schichtenabfolge in an sich bekannter Weise gemeinsam durch eine ringförmige Koextrusionsdüse in thermoplastischem Zustand schlauchförmig zu extrudieren, und zwar im Koextrusionsverfahren, und nachfolgend in Kühlwasser einer Temperatur von 1 bis 20°C, vorzugsweise 6 bis 16°C binnen kurzer Zeit abzukühlen.

Die Verweilzeit im Kühlwasser beträgt nach einem Vorschlag der Erfindung 3 bis 10 s.

Es kann vorgesehen sein, die schlauchförmig koextrudierte Schichtenabfolge mit einem innerhalb derselben wirkenden Überdruck zu beaufschlagen, so dass sie durch einen mit Kühlwasser durchflossenen Kalibrierring geführt wird, welcher den Außendurchmesser des Folienschlauches bestimmt. Alternativ oder zusätzlich kann auch vorgesehen sein, die schlauchförmig koextrudierte Schichtenabfolge außenseitig mit einem Unterdruck zu beaufschlagen und durch einen mit Kühlwasser durchflossenen Kalibrierring zu durchführen, welcher den Außendurchmesser des Folienschlauches bestimmt. Demgemäß wird der Folienschlauch entweder durch inneren Überdruck gegen den wasserdurchflossenen Kalibrierring gedrückt oder durch ein äußeres Vakuum gegen einen wasserdurchflossenen Kalibrierring gesaugt, so dass sich der gewünschte Außendurchmesser des Folienschlauches einstellt.

Je nach Verwendungszweck der erfindungsgemäßen Folie kann der erhaltene Folienschlauch so schlauchförmig belassen werden oder zu einer flachen Folie in Längsrichtung aufgeschnitten werden.

Zum biaxialen Verstrecken des erhaltenen Folienschlauches wird vorgeschlagen, diesen nach dem Abkühlen in Wasser erneut auf eine Temperatur von 50 bis 100°C, vorzugsweise 65 bis 80°C zu erwärmen, was z.B. durch warmes Wasser, Infrarotstrahlung oder Warmluft bewirkt werden kann. Sodann wird innerhalb des Folienschlauches ein Überdruck z.B. durch Lufteinleitung erzeugt, so dass sich der Folienschlauch zu einer erneuten Blase im so genannte Double-bubble-Verfahren aufbläst, wodurch der Folienschlauch eine biaxiale Verstreckung mit einem Flächenreckverhältnis von 1:8 bis 1:20, vorzugsweise 1:10 bis 1:16 erfährt. Im Allgemeinen sind die Längs- und Querreckverhältnisse etwa gleich, können jedoch auch verschieden eingestellt werden.

Ein Annealingschritt in Form von erneuter Temperaturzuführung, z.B. durch Wärmestrahlung, Wasserbad, Heissluft oder Führung über beheizte Walzen, vor dem Aufwickeln der Folie kann in an sich bekannter Weise vorgesehen werden, um optimale Wickelqualitäten über den Lagerungszeitraum zu realisieren und/oder um den minimalen oder maximalen Restschrumpf bei erneuter Temperaturbeaufschlagung im Verpackungsprozess einstellen zu können.

Mit der vorangehend erläuterten Folie gelingt es, eine signifikante Erhöhung der Taktzahlen beim Versiegeln nach Befüllung z.B. mit Lebensmitteln durch die vorteilhafte hohe Wärmeformbeständigkeit der PBT-Außenlage zu erzielen, da ein Anhaften der äußeren Schicht am Siegelbalken verhindert oder zumindest erheblich reduziert wird.

Sofern die vorangehend erläuterte Folie eine biaxiale Verstreckung erfährt, kann sie durch entsprechendes Annealing möglichst dimensionsstabil beim Siegeln gehalten werden, da die äußere Schicht aus PBT eine Thermofixierung in Richtung eines Schrumpfes von nahezu 0 % erfährt.

Durch die höhere Steifigkeit des gesamten erfindungsgemäßen Verbundes der Folie uns insbesondere das vorteilhafte E-Modul der aus PBT gebildeten ersten äußeren Schicht wird überdies eine bessere Bedruckbarkeit der Folie erzielt, die einen brillanten Druck in Fotoqualität zulässt.

Darüber hinaus lässt sich die erfindungsgemäße Folie bei üblichen 121°C ohne Eintrübung sterilisieren, so dass aus der erfindungsgemäßen Folie hergestellte Verpackungen für "Cook-in"-Lösungen prädestiniert sind.

Neben der bereits erwähnten schnelleren Siegelung ohne Anhaften am Siegelbalken mit hohen Taktzahlen können durch die erfindungsgemäße Folie auch defektfreie sichere Siegelnähte mit höchster Sicherheit erzielt werden.

## Patentansprüche

1. Mehrschichtige Folie, die unterhalb einer ersten äußeren Schicht mindestens die nachfolgend aufgeführten Schichten umfasst:
- eine zweite Schicht auf Basis eines Polyolefins,
- eine dritte Schicht auf Basis eines Polyamids,
- eine vierte Schicht auf Basis eines Ethylen-Vinylalkohol-Copolymers,
- eine fünfte Schicht auf Basis eines Polyamids,
- eine sechste Schicht aus einem Haftvermittler,
- eine siebte innerste Schicht auf Basis eines Polyolefins,
**dadurch gekennzeichnet, dass** alle Schichten im Coextrusionsverfahren miteinander verbunden sind und die erste äußere Schicht auf Basis von Polybutylenterephthalat (PBT) mit einen Schmelzpunkt zwischen 200°C und 230°C und einer Kristallinität, gemessen als Schmelzeenthalpie in einem DifferentialScanning-Kalorimeter bei einer Aufheizrate von 10 K/min nach ISO 3146 von mindestens 40 J/g gebildet ist.

2. Folie nach Anspruch 1, **dadurch gekennzeichnet, dass** die erste Schicht aus einem PBT gebildet ist, welches zu mindestens 80 % aus einem Polyester enthaltend mindestens 90 % Terephtalsäure als Säurekomponente und mindestens 90 % Butandiol als Diolkomponente umfasst.

3. Folie nach einem der Ansprüche 1 oder 2, **dadurch gekennzeichnet, dass** die erste Schicht aus einer Mischung aus PBT und bis zu 20 %, vorzugsweise 5 bis 15 % eines von PBT verschiedenen Polyesters gebildet ist.

4. Folie nach Anspruch 3, **dadurch gekennzeichnet, dass** der von PBT verschiedene Polyester ein glykolmodifizierter Polyester mit einem Schmelzpunkt von 230 bis 250°C ist.

5. Folie nach einem der Ansprüche 1 bis 4, **dadurch gekennzeichnet, dass** die zweite Schicht ein Polyolefin, ausgewählt aus der Gruppe umfassend LDPE und LLDPE mit einer Dichte von 0,910 bis 0,930 g/cm³ ist.

6. Folie nach einem der Ansprüche 1 bis 5, **dadurch gekennzeichnet, dass** die zweite Schicht aus einem haftvermittelnden Olefin-Copolymer oder einer Kombination desselben mit bis zu 90 % eines weiteren Polyolefins gebildet ist, wobei das haftvermittelnde Olefin-Copolymer entweder homogen im weiteren Polyolefin verteilt oder diskret an dessen Grenzflächen zur ersten und dritten Schicht angeordnet ist.

7. Folie nach einem der Ansprüche 1 bis 6, **dadurch gekennzeichnet, dass** die dritte und/oder fünfte Schicht mindestens 75 % eines Polyamids enthält.

8. Folie nach Anspruch 7, **dadurch gekennzeichnet, dass** das Polyamid ein Polyamid-6 ist.

9. Folie nach Anspruch 7, **dadurch gekennzeichnet, dass** das Polyamid ein Copolyamid aus 75 bis 95 % Caprolactam und der komplementären Menge an Laurinlactam, Lauryllactam oder einer äquimolaren Mischung aus Dicarbonsäuren, ausgewählt aus der Adipin-, Kork-, Sebacin-, Isophthal-, und Terephthalsäure umfassenden Gruppe und Aminen, ausgewählt aus der Hexamethyldiamin, Octamethylendiamin, Methylpentandiamin, Metaxylylindiamin, Trimethylhexamethylendiamin und Isophorondiamin umfassenden Gruppe gebildet ist.

10. Folie nach einem der Ansprüche 7 bis 9, **dadurch gekennzeichnet, dass** das Polyamid mit bis zu 25 % eines teilaromatischen, amorphen Polyamids aus 50 bis 100 % Isophtalsäure und entsprechend 50 bis 0 % Terephthalsäure als Säurekomponente und 50 bis 100 % Hexamethylendiamin und entsprechend 50 bis 0 % weiteren Diaminen, ausgewählt aus Diaminodiphenylmethan, (Diaminodimethyl)diphenylmethan, Isophorondiamin, Methylpentandiamin umfassenden Gruppe vermischt ist.

11. Folie nach einem der Ansprüche 1 bis 10, **dadurch gekennzeichnet, dass** die Dicke der dritten und/oder fünften Schicht 3 bis 20 µm, vorzugsweise 6 bis 15 µm beträgt.

12. Folie nach einem der Ansprüche 1 bis 11, **dadurch gekennzeichnet, dass** sie mit einem Flächenreckverhältnis von 1:8 bis 1:20, vorzugsweise 1:10 bis 1:16 biaxial verstreckt ist und die Gesamtdicke der Folien nach dem biaxialen Verstrecken 20 bis 70 µm, vorzugsweise 30 bis 50 µm beträgt.

13. Folie nach Anspruch 12, **dadurch gekennzeichnet, dass** sie einen Schrumpf in Längs- und Querrichtung, gemessen bei 85°C/1 min in Wasser von mindestens 20 %, vorzugsweise 30 bis 50 % aufweist.

14. Folie nach einem der Ansprüche 1 bis 13, **dadurch gekennzeichnet, dass** die vierte Schicht aus einem Ethylen-Vinylalkohol-Copolymer mit einem EthylenGehalt von 29 bis 50 Mol-%, vorzugsweise 35 bis 40 Mol-% gebildet ist.

15. Folie nach einem der Ansprüche 1 bis 14, **dadurch gekennzeichnet, dass** die innerste Schicht aus Polyethylen, Polypropylen, einem Ethylen-Copolymer wie EVA, einem Ethylen-Acrylat-Copolymer oder einem Ionomer gebildet ist.

16. Verfahren zur Herstellung einer Folie gemäß den vorhergehenden Ansprüchen, bei welchem die Schichtenabfolge gemeinsam durch eine ringförmige Coextrusionsdüse in thermoplastischem Zustand schlauchförmig coextrudiert wird und nach folgend in Kühlwasser einer Temperatur von 1 bis 20°C, vorzugsweise 6 bis 16°C zu einem die Folie bildenden Folienschlauch abgekühlt wird.

17. Verfahren nach Anspruch 16, **dadurch gekennzeichnet, dass** die Verweilzeit im Kühlwasser 3 bis 10 s beträgt.

18. Verfahren nach Anspruch 16 oder 17, **dadurch gekennzeichnet, dass** die schlauchförmige coextrudierte Schichtenabfolge mit einem innerhalb derselben wirkenden Überdruck beaufschlagt wird und durch einen mit Kühlwasser durch-flossenen Kalibrierring geführt wird, welcher den Außendurchmesser des Folien-schlauches bestimmt.

19. Verfahren nach einem der Ansprüche 16 bis 18, **dadurch gekennzeichnet, dass** die schlauchförmig extrudierte Schichtenabfolge außenseitig mit einem Unterdruck beaufschlagt wird und durch einen mit Kühlwasser durchflossenen Kalibrierring geführt wird, welcher den Außendurchmesser des Folienschlauches bestimmt.

20. Verfahren nach einem der Ansprüche 16 bis 19, **dadurch gekennzeichnet, dass** der Folienschlauch nach dem Abkühlen erneut auf eine Temperatur von 50 bis 100°C, vorzugsweise 65 bis 80°C erwärmt wird und im Double-bubble-Verfahren zu einer mit Überdruck gefüllten Blase aufgeblasen wird, wobei der Folienschlauch mit einem Flächenverhältnis von 1:8 bis 1:20, vorzugsweise 1:10 bis 1:16 biaxial verstreckt wird.
